Europäisches Patentamt

European Patent Office

Office européen des brevets

(11) Veröffentlichungsnummer: **0 140 250**
**B1**

(19)

(12) **EUROPÄISCHE PATENTSCHRIFT**

(45) Veröffentlichungstag der Patentschrift:
16.09.87

(51) Int. Cl.⁴: **A 22 C 13/00**

(21) Anmeldenummer: **84112278.1**

(22) Anmeldetag: **12.10.84**

(54) Schlauchförmige Verpackungshülle und Flachfolie zu ihrer Herstellung.

(30) Priorität: **20.10.83 DE 3338054**

(43) Veröffentlichungstag der Anmeldung:
**08.05.85 Patentblatt 85/19**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**EP - A - 0 054 162**
**WO - A - 83/02387**
**DE - A - 2 848 987**
**DE - A - 3 127 444**

(73) Patentinhaber: **HOECHST AKTIENGESELLSCHAFT,**
**Postfach 80 03 20, D-6230 Frankfurt am Main 80 (DE)**

(72) Erfinder: **Klenk, Ludwig, Jungferweg 20,**
**D-6227 Oestrich-Winkel III (DE)**
Erfinder: **Heyse, Klaus, Kelkheimer Strasse 10,**
**D-6232 Bad Soden (DE)**

## Beschreibung

Die Erfindung bezieht sich auf eine als Wursthülle geeignete schlauchförmige Verpackungshülle mit einer längsaxial sich erstreckenden Naht, bestehend aus einer zu einem Schlauch geformten Flachfolie aus vorzugsweise faserverstärktem Cellulosehydrat mit einem Weichmachergehalt von 5 bis 20 Gew.-%, bezogen auf die Hülle, wobei die beiden Ränder der Flachfolie mit einem Nähfaden verbunden sind.

Die Erfindung bezieht sich ferner auf eine Flachfolie zur Herstellung dieser Verpackungshülle.

Eine schlauchförmige Verpackungshülle dieser Art, beziehungsweise eine solche Flachfolie, ist bekannt und wird insbesondere als Wursthülle verwendet, wobei das Füllgut allerdings mit der Hand eingefüllt wird.

Diese Verpackungshüllen beziehungsweise Flachfolien zeigen den Nachteil, dass sie für den Einsatz auf automatischen, schnell laufenden Füll-Clip-Vorrichtungen, die für nahtlos hergestellte Schlauchhüllen vorgesehen sind, wenig geeignet sind. Diese Maschinen arbeiten bekanntlich mit einem relativ hohen Fülldruck. Dadurch wird die Nahtzone der genähten Verpackungshülle wesentlich höher belastet als beim Einfüllen mit der Hand. Folglich ist auch eine hohe Einreissfestigkeit des Hüllenmaterials im Bereich des durch die Nähnadel gestochenen Loches erforderlich.

So hat sich gezeigt, dass eine genähte Wursthülle aus einem Hüllenmaterial auf Basis von faserverstärktem Cellulosehydrat mit einem üblichen Feuchtigkeitsgehalt von beispielsweise bis 10 Gew.-% und einem Glyceringehalt von 5 bis 15 Gew.-%, jeweils bezogen auf die Hülle, nach dem maschinellen Füllen mit Wurstmasse, im Bereich der durch die Nähnadel entstandenen Einstichlöcher drei um ca. 120° gegeneinander versetzte Einrisse aufweist, die sich jeweils in Richtung vom Mittelpunkt des Einstichlochs nach aussen erstrecken.

Die bisher verwendeten genähten Verpackungshüllen zeigen aber noch weitere Nachteile beim Füllen. So zeigen die durch die Nadel beim Nähen entstandenen Einstichlöcher zwangsläufig einen Durchmesser, der grösser ist als der Durchmesser des Nähfadens. Infolgedessen bildet sich zwischen Nähfaden und Umfangsrand des Einstichlochs eine undichte Stelle in der Verpackungshülle.

Es ist deshalb Aufgabe der vorliegenden Erfindung, die schlauchförmige Verpackungshülle bzw. Flachfolie der eingangs genannten Art dahingehend zu verbessern, dass sie bei ihrer bestimmungsgemässen Verwendung im Bereich der Einstichlöcher im wesentlichen keine undichten Stellen mehr aufweist und insbesondere keine Einrisse am jeweiligen Umfangsrand der Einstichlöcher zeigt.

Diese Aufgabe wird gelöst durch die schlauchförmige Verpackungshülle mit den im Anspruch 1 genannten Merkmalen und die zu ihrer Herstellung geeignete Flachfolie nach Anspruch 6. Die abhängigen Ansprüche geben Weiterbildungen der Verpackungshülle bzw. der Flachfolie an.

Diese Verpackungshülle bzw. die dafür vorgesehene Flachfolie zeigen den Vorteil, dass die beim Nähen entstandenen Löcher keine Einrisse mehr aufweisen. Vielmehr bildet sich beim Durchtreten der Nähnadel ein vom Mittelpunkt ausgehender, in Stichrichtung sich kraterförmig erhebender Materialwulst, der sich beim Herausziehen der Nähnadel weitgehend zurückbildet und sich eng und praktisch abstandslos an den Nähfaden anschmiegt. Die Wirkung des Weichmachers in diesem Zusammenhang ist völlig überraschend, da Verbindungen dieser Art üblicherweise zur plastifizierenden Wirkung des Cellulosehydrats, d. h. zur Verbesserung der Geschmeidigkeit und Herabsetzung der Sprödigkeit des Hüllenmaterials, zur Feuchteregulation und zur Verhinderung des Austrocknens des Materials bei der Lagerung, da die Abgabegeschwindigkeit von Wasser reduziert wird, und zur Verhütung von Schimmelbildung eingesetzt werden.

Die Flachfolie bzw. die Verpackungshülle besteht aus Cellulosehydrat oder faserverstärktem Cellulosehydrat, wie es beispielsweise in der EP-A-0054162 beschrieben wird. Zur Herstellung der Flachfolie geht man gewöhnlich von Viskose aus, die eine alkalische Lösung von Natrium-Cellulosexanthogenat ist. Die Viskose wird entweder ohne Faserverstärkung bahnförmig extrudiert oder auf einen bahnförmigen Faserkörper, z. B. ein Papier, aufgebracht. Danach wird die Viskose durch Zusatz geeigneter Flüssigkeiten versponnen, d. h. koaguliert.

Das koagulierte Produkt wird dann in saurem Medium zu Cellulosehydrat in Gelform regeneriert, mit Wasser gewaschen und mit Weichmacher behandelt. Gegebenenfalls nach Beschichtung einer oder beider Oberflächen des Produkts mit weiteren Verbindungen zur Herstellung von Oberflächenschichten mit bestimmten Eigenschaften erfolgt der Trockenprozess, bei dem das bahnförmige Cellulosehydrat auf einen bestimmten Wassergehalt eingestellt wird, der gewöhnlich bei 5 bis 15 Gew.-%, bezogen auf die Hülle, liegt. Der durch die Weichmacherbehandlung erzielte Gehalt an Weichmacher beträgt, wie in Anspruch 1 angegeben, 5 bis 20, insbesondere 10 bis 18 Gew.-%, bezogen auf die Hülle.

Das wesentliche Merkmal dieser Flachfolie bzw. der daraus hergestellten einrissfreien, genähten Verpackungshülle besteht darin, dass sie partiell, nämlich im Bereich der Naht, einen Weichmachergehalt aufweist, der höher ist als im übrigen Bereich der Verpackungshülle. Vorzugsweise beträgt dieser erhöhte Weichmachergehalt bis zu 30, insbesondere 21 bis 25 Gew.-%, bezogen auf die Hülle. Wie festgestellt wurde, würde dieser über die gesamte Verpackungshülle erhöhte Weichmachergehalt zu Problemen beim Nähen führen, insbesondere ist dann der Einlauf der Flachfolie in die Nähvorrichtung nicht einwandfrei.

Auch die Ränder selbst der bahnförmigen Flachfolie, die sich beim Schlauch überlappen, d. h. die Bahnkanten, sollen nach Möglichkeit nicht den erhöhten Weichmachergehalt aufweisen, da sie dann zum Nähen zu weich und wellig werden. Deshalb soll in bevorzugter Ausführungsform der Weichmachergehalt in zwei flächenhaften streifenförmigen Zonen erhöht sein, die sich im Abstand und parallel zu der jeweils benachbarten Bahnkante erstrecken. Es ist allerdings auch ausreichend, wenn diese streifenförmigen Zonen unterbrochen sind, so dass der erhöhte Weichmachergehalt im äussersten Fall nur an punktförmigen Stellen vorhanden ist, nämlich dort, wo die Nadel durch das Material gestochen wird.

Zur Erhöhung des Weichmachergehalts wird die Flachfolie an den dafür vorgesehenen Zonen beispielsweise an einem entsprechenden Walzenantragssystem vorbeigeführt, wobei die Walzen zur Herstellung der streifenförmigen Zonen eine geschlossene und zur Herstellung der unterbrochenen Zonen eine profilierte Oberfläche aufweisen. Der Weichmacher wird in wässriger Lösung aufgebracht, so dass sich in der Flachfolie nicht nur der Weichmachergehalt, sondern auch der Wassergehalt erhöht, wobei Werte von 16 bis zu 25, insbesondere 18 bis 23 Gew.-%, bezogen auf die Hülle, erreicht werden. Ein evtl. aufgebrachter Überschuss an Weichmacherlösung kann beispielsweise mit einem Rakel abgestreift werden.

Als Weichmacher für die aus Cellulosehydrat oder faserverstärktem Cellulosehydrat bestehende Verpackungshülle kann jede für diesen Zweck bekannte Verbindung verwendet werden, insbesondere mehrwertige Alkohole, wie z.B. Sorbit, Propandiol oder Glycerin.

Es ist von besonderem Vorteil, praktisch sofort nach dem Aufbringen der Weichmacherlösung mit dem Nähvorgang zu beginnen, da einerseits das Material in relativ kurzer Zeit (2 bis 5 s) eine genügende Menge an wässriger Weichmacherlösung aufnehmen kann und andererseits nach einiger Zeit der erhöhte Anteil an Weichmacherlösung im Nahtbereich nachteiligerweise durch Diffusion und Verdampfen auf die Konzentration des Weichmachers/Wassers in dem angrenzenden Material erniedrigt wird. Bei einer Nähgeschwindigkeit von beispielsweise 10 m/min sollte demnach der Antragsort für den Weichmacher mindestens etwa 30 bis 85 cm vor der Nähnadel angeordnet sein. Sofern die Flachfolie eine wasserdampfdichte Oberflächenschicht aufweist, erfolgt der Weichmacherauftrag auf der unbeschichteten Oberfläche. Zum Nähen wird die Flachfolie in Längsrichtung vorzugsweise so zur Hälfte gefaltet, dass die Antragsstellen des Weichmachers aussen liegen. In diesem gefalteten Zustand wird die Flachfolie entlang ihrer Bahnkanten genäht und anschliessend je nach Verwendungszweck weiterverarbeitet, z.B. als flachgelegter Schlauch aufgewickelt oder in einseitig verschlossene Abschnitte unterteilt.

Es ist besonders vorteilhaft, einen Nähfaden aus quellfähigem Material, z.B. ein Baumwollgarn oder Viskose-Rayon-Garn, zu verwenden. Durch Aufnahme von Feuchtigkeit aus der Umgebung, d.h. aus dem Hüllenmaterial oder dem Verpackungsinhalt, quillt dann das Garn, wodurch eine zusätzliche abdichtende Wirkung hervorgerufen wird.

Die Verpackungshülle ist vor allem als genähte Wursthülle geeignet. Sie lässt sich auch problemlos mit üblichen Schälvorrichtungen von der Wurstmasse ablösen. Je nach vorgesehenem Wursttyp kann die Verpackungshülle auf der Innen- und/oder Aussenseite eine an sich bekannte Oberflächenschicht aufweisen, z.B. eine wasserdampfdichte Sperrschicht, eine das Abschälen erleichternde Schicht oder eine Schimmelwachstum verhindernde Schicht. Nach Fertigstellung der Wurst ist der unterschiedliche Weichmachergehalt in der Hülle normalerweise nicht mehr nachweisbar, da der Wursthersteller die Wursthülle vor ihrer Verarbeitung üblicherweise einem Wässerungsvorgang unterwirft, bei dem der Weichmacher im wesentlichen entfernt wird. Der erhöhte Wassergehalt im Nahtbereich sinkt hingegen bereits nach relativer kurzer Zeit nach dem Aufbringen der Weichmacherlösung auf den Durchschnittswassergehalt des Materials ab. Da ein erhöhter Wassergehalt während des Nähens von Vorteil ist, sollte, wie bereits oben beschrieben, der Nähvorgang möglichst bald nach dem Aufbringen der wässrigen Weichmacherlösung durchgeführt werden.

Die Erfindung wird durch die Fig. 1 bis 3 näher erläutert.

In Fig. 1 ist eine bevorzugte Ausführungsform der Schlauchhülle perspektivisch dargestellt,

Fig. 2 zeigt einen Ausschnitt der Fig. 1 in vergrössertem Massstab,

Fig. 3 zeigt analog Fig. 2 einen Ausschnitt mit einer anderen Ausführungsform der Schlauchhülle in vergrössertem Massstab.

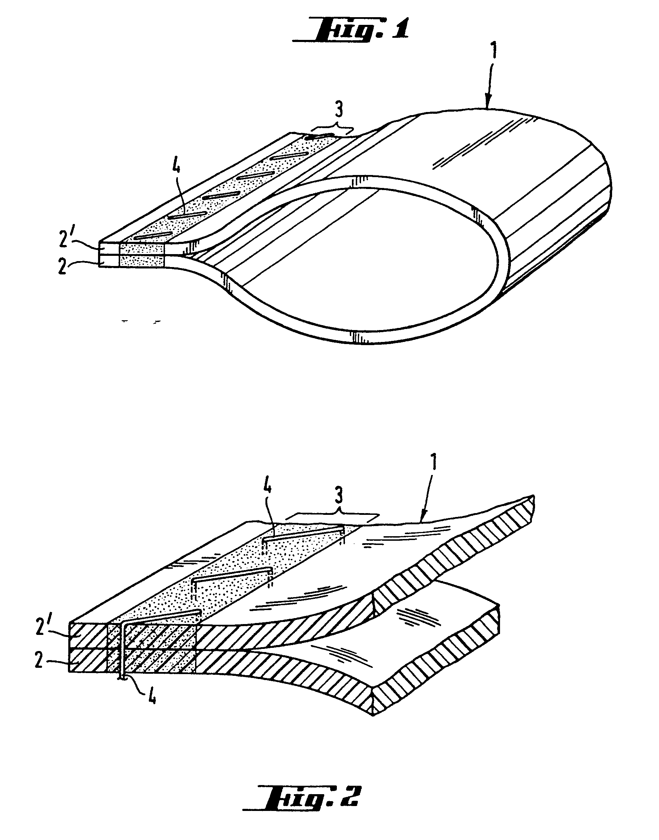

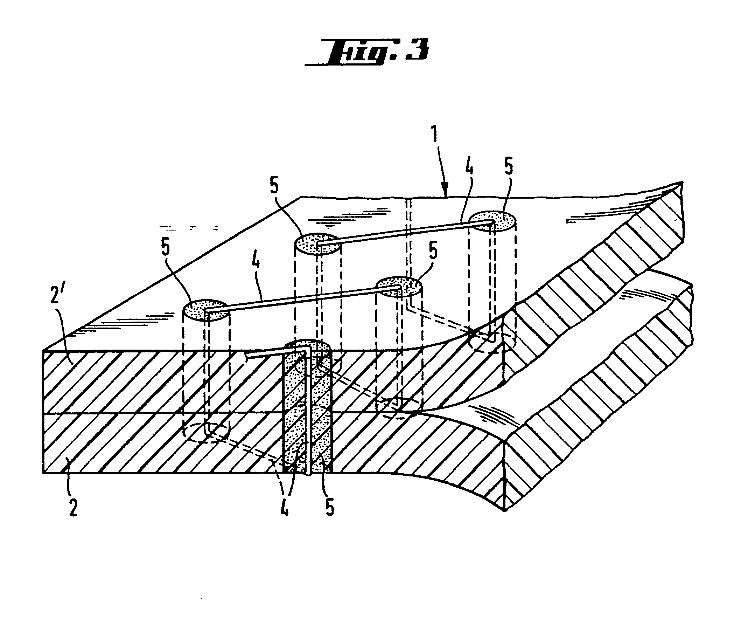

Die Schlauchhülle besteht jeweils aus einer Flachfolie 1. Sie ist zu einem Schlauch gebogen, ihre Ränder 2, 2' überlappen sich. Ein Nähfaden 4 verbindet die Ränder 2,2' miteinander. In Fig. 1 und 2 befindet sich der erhöhte Weichmacher- und gegebenenfalls Wassergehalt in der streifenförmigen Zone 3, in Fig. 3 in punktförmigen Zonen 5.

## Patentansprüche

1. Als Wursthülle geeignete schlauchförmige Verpackungshülle mit einer längsaxial sich erstreckenden Naht, bestehend aus einer zu einem Schlauch geformten Flachfolie (1) aus vorzugsweise faserverstärktem Cellulosehydrat mit einem Weichmachergehalt, vorzugsweise Glyceringehalt, von 5 bis 20, insbesondere 10 bis 18 Gew.-%, und einem Feuchtigkeitsgehalt von 5 bis 15 Gew.-%, jeweils bezogen auf die Hülle, wobei die beiden Ränder (2, 2') der Flachfolie (1) mit einem Nähfaden (4) verbunden sind, dadurch gekennzeichnet, dass die Verpackungshülle im Bereich des Nähfadens (4) einen gegenüber den übrigen Bereichen der Verpackungshülle erhöhten Weichmachergehalt, vorzugsweise bis 30, insbesondere 21 bis 25 Gew.-%, und gegebenenfalls auch einen höheren Feuchtigkeitsgehalt von 16 bis 25, insbesondere 18 bis 23 Gew.-%, jeweils bezogen auf die Hülle, aufweist.

2. Verpackungshülle nach Anspruch 1, dadurch gekennzeichnet, dass der Weichmacher im Bereich der Naht einen mehrwertigen Alkohol, insbesondere Glycerin, umfasst.

3. Verpackungshülle nach Anspruch 1 oder 2, dadurch gekennzeichnet, dass der Nähfaden (4) aus quellfähigem Material besteht.

4. Verpackungshülle nach einem der Ansprüche 1 bis 3, dadurch gekennzeichnet, dass der Weichmachergehalt jeweils in punktuellen Zonen (5) um den Einstichpunkt für den Nähfaden (4) erhöht ist.

5. Verpackungshülle nach einem der Ansprüche 1 bis 3, dadurch gekennzeichnet, dass der Weichmachergehalt im Bereich von zwei parallel zu der Naht und im Durchstichbereich des Nähfadens (4) verlaufenden streifenförmigen Flächen (3) erhöht ist.

6. Flachfolie (1) zur Herstellung der Verpackungshülle nach Anspruch 1, bestehend aus vorzugsweise faserverstärktem Cellulosehydrat mit einem Weichmachergehalt von 5 bis 20, insbesondere 10 bis 18 Gew.-%, und einem Feuchtigkeitsgehalt von 5 bis 15 Gew.-%, jeweils bezogen auf die Flachfolie, dadurch gekennzeichnet, dass sie entlang der beiden längsaxial sich erstreckenden Ränder (2, 2') im vorgesehenen Nahtbereich einen gegenüber den übrigen Bereichen der Flachfolie erhöhten Gehalt an Weichmacher, vorzugsweise umfassend Glycerin, und gegebenenfalls einen erhöhten Wassergehalt, aufweist.

7. Flachfolie nach Anspruch 6, dadurch gekennzeichnet, dass der erhöhte Weichmachergehalt bis 30, insbesondere 21 bis 25 Gew.-%, und der gegebenenfalls erhöhte Wassergehalt 16 bis 25, insbesondere 18 bis 23 Gew.-%, jeweils bezogen auf die Flachfolie, beträgt.

8. Flachfolie nach Anspruch 6 oder 7, dadurch gekennzeichnet, dass der Weichmachergehalt und gegebenenfalls der Wassergehalt jeweils in punktuellen Zonen (5) an den vorgesehenen Einstichpunkten für den Nähfaden (4) erhöht ist.

9. Flachfolie nach Anspruch 6 oder 7, dadurch gekennzeichnet, dass der Weichmachergehalt und gegebenenfalls der Wassergehalt entlang von zwei jeweils parallel zu dem benachbarten Folienrand und parallel zueinander sich erstreckenden flächenhaften Streifen (3) erhöht ist.

## Claims

1. Tubular packaging casing with a seam running along its longitudinal axis, which is suitable as a sausage casing and consists of a tubing formed from a flat film (1) of, preferably fiber-reinforced, cellulose hydrate with a content of plasticizer, preferably of glycerol, of 5 to 20% by weight, in particular of 10 to 18% by weight and a moisture content of 5 to 15% by weight, each time related to the weight of the casing, whereby the two edges (2, 2') of the flat film (1) are bonded by means of a sewing thread (4), characterized in that, compared to the other areas of the packaging casing, the packaging casing has an increased content of plasticizer in the area of the sewing thread (4), of preferably up to 30% by weight, in particular 21 to 25% by weight, and optionally also an increased moisture content of 16 to 25% by weight, in particular of 18 to 23% by weight, each time related to the weight of the casing.

2. Packaging casing as claimed in claim 1, wherein the plasticizer in the area of the seam comprises a polyhydric alcohol, in particular glycerol.

3. Packaging casing as claimed in claim 1 or 2, wherein the sewing thread (4) is made of a swellable material.

4. Packaging casing as claimed in any of claim 1 to 3, wherein the content of plasticizer is increased in punctiform zones (5) surrounding the points where the sewing thread (4) pierces the material.

5. Packaging casing as claimed in any of claim 1 to 3, wherein the content of plasticizer is increased in the area of two strip-like zones (3) which run parallel to the seam, in the area where the sewing thread (4) pierces the material.

6. Flat film (1) for producing the packaging casing as claimed in claim 1, which consists of, preferably fiber-reinforced, cellulose hydrate with a content of plasticizer of 5 to 20% by weight, in particular of 10 to 18% by weight, and a moisture content of 5 to 15% by weight, each time related to the weight of the flat film, characterized in that in the envisaged seam area which extends along the two edges (2, 2') running in the direction of the longitudinal axis, said flat film has an increased content of plasticizer, compared to the other areas of the flat film, which plasticizer preferably comprises glycerol, and optionally also has an increased water content.

7. Flat film as claimed in claim 6, wherein the increased plasticizer content amounts up to 30% by weight, in particular to 21 to 25% by weight, and the optionally increased water content amounts to 16 to 25% by weight, in particular to 18 to 23% by weight, each time related to the weight of the flat film.

8. Flat film as claimed in claim 6 or 7, wherein the content of plasticizer and optionally also of water is increased in punctiform zones (5) surrounding the individual points where the sewing thread (4) is intended to pierce the material.

9. Flat film as claimed in claim 6 or 7, wherein the content of plasticizer and optionally also of water is increased in two continuous strip-like zones (3) running parallel in respect of each other and in respect of the adjoining film edges.

## Revendications

1. Enveloppe tubulaire avec un joint s'étendant le long de son axe longitudinal, utilisable comme boyau à saucisse, qui consiste en une feuille plate (1) mise sous forme de boyau en hydrate de cellulose de préférence renforcé avec des fibres et contenant un plastifiant, avantageusement de la glycérine, en une teneur de 5 à 20, en particulier de 10 à 18% en poids et ayant une teneur en humidité de 5 à 15% en poids, dans chaque cas par rapport au poids de l'enveloppe, les deux bords (2, 2') de ladite feuille étant reliés avec un fil à coudre (4), caractérisée en ce que l'enveloppe a, dans la zone du fil à coudre (4) une teneur en plastifiant plus élevée, par rapport aux autres zones de l'enveloppe, de préférence jusqu'à 30, en particulier de 21 à 25% en poids et éventuellement également une teneur plus élevée en eau de 16 à 25, en particulier de 18 à 23% en poids, dans chaque cas par rapport au poids de l'enveloppe.

2. Enveloppe selon la revendication 1, caractérisée en ce que le plastifiant dans la zone de la couture est un polyalcool, en particulier la glycérine.

3. Enveloppe selon la revendication 1 ou 2, caractérisée en ce que le fil à coudre (4) est fait d'un matériau gonflable.

4. Enveloppe selon l'une des revendications 1 à 3, caractérisée en ce que la teneur en plastifiant est plus élevée dans des zones ponctuelles (5) entourant les points de piqûres du fil à coudre (4).

5. Enveloppe selon l'une des revendications 1 à 3, caractérisée en ce que la teneur en plastifiant est plus élevée dans la zone de deux surfaces (3) formant des bandes, qui sont parallèles à la couture dans la zone où le fil à coudre traverse le matériau.

6. Feuille plate (1) pour la fabrication de l'enveloppe selon la revendication 1, qui consiste en un hydrate de cellulose de préférence renforcé avec des fibres, avec une teneur en plastifiant de 5 à 20, en particulier de 10 à 18% en poids en une teneur en humidité de 5 à 15% en poids, par rapport à la feuille plate dans chaque cas, caractérisée en ce qu'elle a, le long des deux bords longitudinaux (2, 2') dans la zone prévue pour la couture, une teneur plus élevée, en plastifiant, de préférence la glycérine, par rapport aux autres zones de la feuille plate, et éventuellement une teneur plus élevée en eau.

7. Feuille plate selon la revendication 6, caractérisée en ce que la teneur plus élevée en plastifiant atteint jusqu'à 30, en particulier de 21 à 25% en poids, et la teneur plus élevée en eau atteint de 16 à 25, de préférence de 18 à 23% en poids, par rapport à la feuille plate dans chaque cas.

8. Feuille plate selon la revendication 6 ou 7, caractérisée en ce que la teneur en plastifiant et éventuellement la teneur en eau sont plus élevées dans chaque cas dans des zones ponctuelles aux points de piqûres prévus pour le fil à coudre (4).

9. Feuille plate selon la revendication 6 ou 7, caractérisée en ce que la teneur en plastifiant et éventuellement la teneur en eau sont plus élevées le long de deux bandes (3) adhérant à la surface, parallèles entre eux, et s'étendant parallèlement à chacun des bords adjacents de la feuille.

Fig. 1

Fig. 2

# _Fig. 3_